# FASCICULE DE BREVET EUROPEEN

(11) **EP 3 395 040 B1**
(45) Date de publication et mention de la délivrance du brevet: **16.08.2023**
(21) Numéro de dépôt: 16826416.6
(22) Date de dépôt: 20.12.2016
(51) Int. Cl.: H04L 9/40

(54) **PROCÉDÉ DE RÉCEPTION DE DONNÉES AU SEIN D'UNE ENTITÉ ÉLECTRONIQUE ET ENTITÉ ÉLECTRONIQUE ASSOCIÉE**
VERFAHREN ZUM EMPFANGEN VON DATEN IN EINER ELEKTRONISCHEN EINHEIT UND ENTSPRECHENDE ELEKTRONISCHE EINHEIT
METHOD OF RECEIVING DATA WITHIN AN ELECTRONIC ENTITY AND ASSOCIATED ELECTRONIC ENTITY

(30) Priorité: 21.12.2015 FR 1562996
(43) Date de publication de la demande: 31.10.2018
(73) Titulaire: IDEMIA France, 92400 Courbevoie (FR)
(72) Inventeur: VALLIERES, Jean-Philippe, 92700 Colombes (FR); GALDO, Florian, 92700 Colombes (FR); DOTTAX, Emmanuelle, 92700 Colombes (FR); RONDEPIERRE, Franck, 92700 Colombes (FR); SARTORI, Michele, 92700 Colombes (FR)
(74) Mandataire: Idemia
(86) Numéro de dépôt international: PCT/FR2016/053581
(87) Numéro de publication internationale: WO 2017/109389

(56) Documents cités:
- US-A1- 2015 334 095

## Description

### DOMAINE TECHNIQUE AUQUEL SE RAPPORTE L'INVENTION

La présente invention concerne les échanges sécurisés de données entre dispositifs électroniques.

Elle concerne plus particulièrement un procédé de réception de données au sein d'une entité électronique et une entité électronique associée.

L'invention s'applique particulièrement avantageusement dans le cas où des données identiques doivent être communiquées de manière sécurisée à un grand nombre d'entités électroniques.

### ARRIERE-PLAN TECHNOLOGIQUE

Afin de pouvoir échanger des données de manière confidentielle entre deux dispositifs électroniques, il est connu d'établir entre ces deux dispositifs électroniques un canal sécurisé par chiffrement au moyen d'une clé cryptographique, comme prévu par exemple par le protocole dit *"SCP03"* décrit dans le document *"GlobalPlatform Card Technology - Secure ChannelProtocol 03 - Card Spécification v 2.2 Amendment D"* (v1.1).

Dans le cadre de ce protocole, afin d'assurer une protection effective des données, la clé cryptographique est une clé de session dérivée à partir d'une clé statique connue seulement des deux dispositifs électroniques.

Cette solution n'est toutefois pas adaptée à la transmission d'un même ensemble de données à un grand nombre d'entités électroniques (comme c'est le cas par exemple lors d'une campagne de mise à jour d'une partie du système d'exploitation d'un grand nombre d'éléments sécurisés) puisqu'il est alors nécessaire de préparer une version chiffrée dédiée pour chaque entité électronique concernée.

On connait aussi le document US 2015/334095 décrivant un système de sécurité pour échanger des données comprenant au moins deux dispositifs jouant le rôle d'hôte ou de client.

### OBJET DE L'INVENTION

Dans ce contexte, la présente invention propose un procédé de réception de données au sein d'une entité électronique selon la revendication 1.

Le premier canal sécurisé peut ainsi être diversifié afin de communiquer de manière sécurisée à l'entité électronique la seconde clé cryptographique, par exemple en utilisant un protocole du type SCP03.

La mise en place d'un second canal sécurisé permet toutefois d'utiliser ensuite un chiffrement différent, basé lorsque cela est souhaitable sur une seconde clé cryptographique utilisée pour chiffrer des données destinées à un grand nombre d'entités électroniques.

Le premier canal sécurisé est par exemple basé sur un protocole de type SCP03 en mode non-prédictif, tandis que le second canal sécurisé est par exemple basé sur un protocole de type SCP03 en mode prédictif.

La seconde clé cryptographique est par exemple incluse dans la première commande.

D'autres caractéristiques éventuellement envisageables sont spécifiées dans les revendications dépendantes.

L'invention propose également une entité électronique selon la revendication 11.

On prévoit en effet dans l'exemple qui suit la sauvegarde du contexte du mode diversifié. Dans d'autres modes de réalisation, on pourrait toutefois prévoir une sauvegarde du contexte pour chacun des modes utilisés (par exemple diversifié et multiutilisateur) avant basculement dans l'autre mode.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente un exemple d'élément sécurisé utilisé dans le cadre de l'invention ;
- la figure 2 est un logigramme présentant un exemple de procédé mis en oeuvre au sein de l'élément sécurisé de la figure 1 ;
- la figure 3 représente un premier contexte possible d'utilisation du procédé de la figure 2 ;
- la figure 4 représente un second contexte possible d'utilisation du procédé de la figure 2 ; et
- la figure 5 est un logigramme présentant un exemple de procédé de mise à jour du système d'exploitation de l'élément sécurisé de la figure 1.

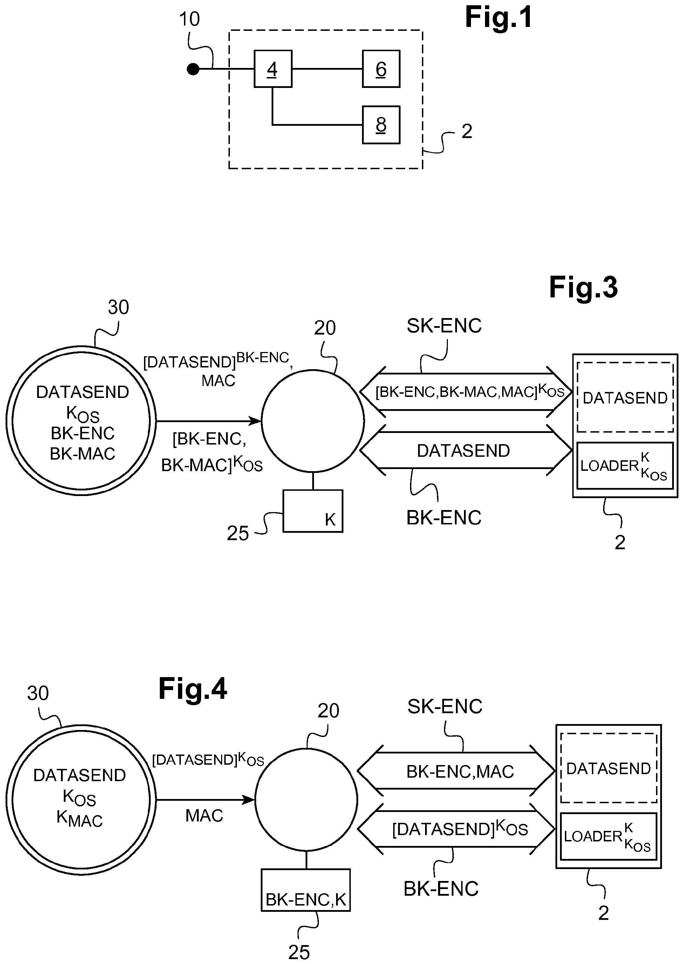

La figure 1 représente un exemple d'élément sécurisé 2 utilisé dans le cadre de l'invention.

Cet élément sécurisé 2 (ou SE pour *"Secure Element*") est par exemple réalisé sous la forme d'un microcontrôleur. Un tel élément sécurisé 2 peut éventuellement être intégré à un appareil électronique, par exemple en étant soudé au sein de l'appareil électronique : l'élément sécurisé est alors de type eSE (pour "*embedded Secure Element*")*.*

En variante, l'élément sécurisé 2 pourrait être une carte microcircuit (par exemple une carte à microcircuit universelle ou UICC pour "*Universal Integrated Circuit Card*"), ou une carte à microcircuit universelle soudée ou eUICC pour *"embedded Universal Circuit Card".*

L'élément sécurisé 2 comprend un processeur 4 (par exemple un microprocesseur), une mémoire non-volatile 6 (par exemple une mémoire non-volatile réinscriptible) et une mémoire vive 8.

La mémoire non-volatile 6 est par exemple de type Flash ou NVRAM.

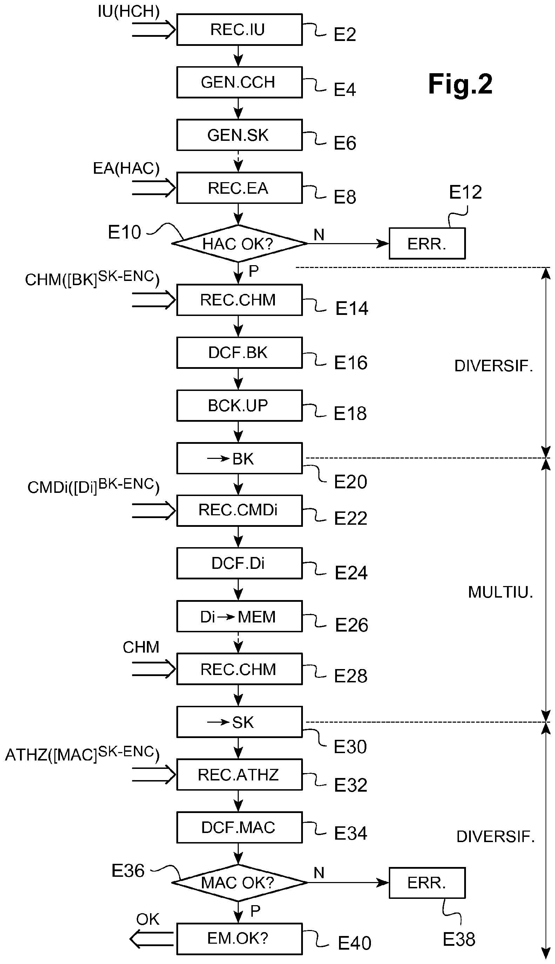

La mémoire non-volatile 6 mémorise des instructions de programme qui permettent la mise en oeuvre de procédés de traitement de données (notamment celui décrit ci-dessous en référence à la figure 2) par l'élément sécurisé 2 lorsque ces instructions sont exécutées par le processeur 4.

La mémoire non-volatile 6 mémorise en outre des données utilisées lors de la mise en oeuvre de tels procédés : la mémoire non-volatile 6 mémorise notamment des clés cryptographiques (dites statiques) utilisées dans les procédés décrits ci-dessous, en particulier un jeu de clés cryptographiques statiques K.

La mémoire vive 8 mémorise des données manipulées par les procédés mis en oeuvre au sein de l'élément sécurisé 2.

L'élément sécurisé 2 comprend également au moins une interface 10 permettant au processeur 4 d'échanger des données avec d'autres dispositifs électroniques. Lorsque l'élément sécurisé 2 est un microcontrôleur, l'interface 10 peut être formée par une ou plusieurs broche(s) du microcontrôleur. Dans le cas où l'élément sécurisé est une carte à microcircuit, l'interface comprend l'un au moins des contacts affleurant sur la face supérieure de la carte à microcircuit. L'interface peut également être un port de type ISO, SWP ou encore SPI.

La figure 2 représente un exemple de procédé mis en oeuvre au sein de l'élément sécurisé 2.

Ce procédé débute à l'étape E2 par la réception, par le processeur 4 et sur l'interface 10, d'une commande de lancement IU contenant un défi d'hôte (en anglais : "*host challenge*") HCH.

Une telle commande de lancement IU, ainsi que les autres commandes reçues par l'élément sécurisé 2 comme mentionné ci-dessous, ont été émises au préalable par un appareil électronique (distinct de l'élément sécurisé 2) qui souhaite établir un canal de communication sécurisé, en vue d'un échange de données sécurisé, avec l'élément sécurisé 2.

La commande de lancement IU est par exemple une commande de type INITIALIZE UPDATE telle que définie au paragraphe 7.1.1 du document *"GlobalPlatform Card Technology* - *Secure Channel Protocol 03* - *Card Spécification v 2.2 Amendment D"* ou dans l'annexe D.4.1 document *"GlobalPlatform Card Spécification v 2.2".*

À réception de la commande de lancement IU, le processeur E4 met en oeuvre les étapes E4 et E6 décrites à présent.

Le processeur 4 génère à l'étape E4 un défi de carte (en anglais : *"card challenge*") CCH, par exemple par tirage aléatoire ou, en variante, par détermination pseudo-aléatoire. La détermination pseudo-aléatoire permet d'obtenir, par calcul à partir de données mémorisées au sein de l'entité électronique 2, un défi de carte CCH imprévisible pour une entité tierce non autorisée. Toutefois, la détermination pseudo-aléatoire pour une tierce partie autorisée permet de calculer le défi de carte et éventuellement de le pré-générer.

On utilise par exemple ici une détermination pseudo-aléatoire du défi de carte CCH telle que définie au paragraphe 6.2.2.1 du document "*GlobalPlatform Card Technology* - *Secure Channel Protocol 03* - *Card Spécification v 2.2 Amendment D"* (v1.1). Dans cet exemple, le défi de carte CCH est déterminé en fonction d'un compteur séquentiel (en anglais : "*sequence counter*"), d'un identifiant de l'application émettrice de la commande de lancement IU et d'une clé cryptographique K-ENC du jeu de clé cryptographiques statiques K mémorisées dans la mémoire non-volatile 6.

Le processeur 4 génère ensuite à l'étape E6 un jeu de clés de session SK, ici en utilisant les clés statiques du jeu de clé cryptographiques statiques K mémorisées dans la mémoire non-volatile 6. Le processeur 4 génère notamment à cette étape une clé de session de chiffrement ou de déchiffrement SK-ENC sur la base de la clé cryptographique K-ENC déjà mentionnée, et ici en outre sur la base du défi d'hôte HCH et du défi de carte CCH, par exemple conformément à ce qui prévu au paragraphe 6.2.1 du document "*GlobalPlatform Card Technology - Secure Channel Protocol 03* - *Card Spécification v 2.2 Amendment D"* (v1.1).

L'élément sécurisé 2 pourrait alors éventuellement renvoyer le défi de carte CCH généré à l'étape E4 à destination de l'appareil électronique émetteur des commandes. Lorsque le défi de carte CCH est obtenu par détermination pseudo-aléatoire comme décrit ici, l'émission du défi de carte CCH n'est pas nécessaire puisque l'appareil électronique émetteur des commandes peut obtenir le défi de carte CCH par le même processus de détermination pseudo-aléatoire.

Le processeur 4 reçoit alors sur l'interface 10 une commande d'authentification EA, accompagnée d'un cryptogramme d'hôte HAC. Ce cryptogramme d'hôte HAC a été préalablement déterminé au sein de l'appareil électronique émetteur des commandes en utilisant une clé de session S-MAC du jeu de clés de session, le défi d'hôte HCH (préalablement émis avec la commande de lancement IU comme indiqué ci-dessus) et le défi de carte CCH (obtenu ici par détermination pseudo-aléatoire comme indiqué ci-dessus).

La commande de lancement EA est par exemple une commande de type EXTERNAL AUTHENTICATE telle que définie au paragraphe 7.1.2 du document "*GlobalPlatform Card Technology* - *Secure Channel Protocol 03* - *Card Spécification v 2.2 Amendment D"* (v1.1) ou dans l'annexe D.4.2 document *"GlobalPlatform Card Spécification v 2.2".*

Le processeur vérifie alors à l'étape E10 si le cryptogramme d'hôte reçu HAC correspond bien au cryptogramme attendu, ce qui permet d'authentifier l'appareil électronique qui envoie les commandes.

Dans la négative, le procédé se poursuit à l'étape E12 à laquelle le processeur 4 met fin à l'échange, sans établissement d'un canal sécurisé.

Au contraire, si le cryptogramme d'hôte reçu HAC correspond bien au cryptogramme attendu, un canal sécurisé est établi entre l'appareil électronique émetteur des commandes et l'élément sécurisé 2. On qualifie ce canal sécurisé de diversifié (voir la mention DIVERSIF. en figure 2) du fait que les clés de session SK utilisées pour assurer la confidentialité des échanges (en particulier la clé de session de chiffrement ou de déchiffrement SK-ENC) ne sont connues que de l'appareil électronique émetteur des commandes et de l'élément sécurisé 2 (et seraient par exemple différentes si l'appareil électronique émetteur des commandes souhaitait établir un canal sécurisé avec un autre élément sécurisé).

On remarque que, dans le cas du protocole SCP-03, trois clés diversifiées sont utilisées, sous la dénomination usuelle SK-ENC, SK-MAC et SK-RMAC.

Le processeur 4 reçoit alors à l'étape E14, via ce canal sécurisé, une commande de basculement CHM, accompagnée d'un jeu de clés de diffusion BK (ainsi que, dans l'exemple décrit ici, d'un compteur de chiffrement et d'une valeur de chaînage de code de vérification). On propose ici d'introduire une telle commande de basculement, par exemple sous la forme d'une commande dédiée, dénommée CHANGE MODE.

Du fait que le canal sécurisé est établi comme décrit ci-dessus, les données annexées à la commande (notamment ici les clés de diffusion BK avec par exemple des données annexes permettant la mise en place d'un second canal sécurisé) sont chiffrées par la clé de session de chiffrement ou de déchiffrement SK-ENC.

Le processeur 4 procède ainsi à l'étape E16 au déchiffrement des clés de diffusion BK au moyen d'un algorithme cryptographique (ici symétrique) de déchiffrement utilisant la clé de session de chiffrement ou de déchiffrement SK-ENC (obtenue comme expliqué ci-dessus à l'étape E6). L'algorithme cryptographique utilisé est par exemple de type AES.

Le processeur 4 procède alors à l'étape E18 à une sauvegarde (notée BCK.UP en figure 2) du contexte dans une zone dédiée de la mémoire vive 8 (ou, en variante, en mémoire non-volatile 6). Le processeur 4 sauvegarde notamment dans cette zone dédiée de la mémoire vive 8 les clés de session SK (dont la clé de session de chiffrement ou de déchiffrement SK-ENC).

Dans l'exemple décrit ici où le protocole du canal sécurisé est de type SCP03, le processeur 4 sauvegarde également dans la zone dédiée un compteur de chiffrement (en anglais : "*encryption counter*") et une valeur de chaînage de code de vérification (en anglais : "*MAC chaining value*") associés au canal sécurisé diversifié (et distincts de ceux reçus à l'étape E14).

Le processeur 4 bascule alors à l'étape E20 dans un mode de diffusion ou mode multiutilisateur (voir MULTIU. en figure 2), dans lequel les clés de diffusion BK sont utilisées en lieu et place des clés de sessions SK. On utilise ici en outre dans ce mode diffusion le compteur de chiffrement et la valeur de chaînage reçus à l'étape E14.

En particulier, dans ce mode de fonctionnement de diffusion (ou multiutilisateur), l'appareil électronique émetteur des commandes et l'élément sécurisé 2 peuvent échanger dans un canal sécurisé dont la confidentialité est assurée par chiffrement au moyen d'une clé de diffusion de chiffrement ou de déchiffrement BK-ENC (utilisée en lieu et place de la clé de session de chiffrement ou de déchiffrement SK-ENC).

Comme cela sera expliqué dans la suite, on dénomme ce mode de fonctionnement *"de diffusion"* ou *"multiutilisateur*" du fait que les clés de diffusion BK sont utilisées pour traiter (en particulier chiffrer) des données destinées à une pluralité (voire à un grand nombre) d'éléments sécurisés.

Le processeur 4 reçoit alors à l'étape E22 une commande CMDi, à laquelle sont annexées des données Di. Comme déjà indiqué, du fait du basculement dans le mode de diffusion (ou mode multiutilisateur) à l'étape E20, les données annexées aux commandes reçues sont à présent chiffrées par la clé de diffusion de chiffrement ou de déchiffrement BK-ENC.

Le processeur 4 procède ainsi à l'étape E24 au déchiffrement des données Di par application d'un algorithme cryptographique (ici symétrique) de déchiffrement utilisant la clé de diffusion de chiffrement ou de déchiffrement BK-ENC reçue à l'étape E14.

Les données Di déchiffrées peuvent ainsi être utilisées au sein de l'élément sécurisé 2 (étape E26), ici en étant sauvegardées dans la mémoire non-volatile 6. Comme expliqué plus loin, on propose ici par exemple que les données Di représentent une partie au moins d'un système d'exploitation applicatif chargé dans l'élément sécurisé 2 depuis un serveur distant. Ces données pourraient toutefois représenter en variante une application (qui ne fait pas partie du système d'exploitation), des clés cryptographiques ou des données utilisées par un composant applicatif extérieur au système d'exploitation.

Les étapes E22 à E26 peuvent être éventuellement réitérées du fait de la réception de plusieurs commandes CMDi (par exemple pour N commandes CMDi, avec i = 1, ..., N comme indiqué en figure 2).

Lorsque toutes les commandes à mettre en oeuvre dans le mode diffusion (ou mode multiutilisateur) ont été reçues, le processeur 4 reçoit une commande de basculement CHM (étape E28) en vue du retour au mode diversifié, par exemple la commande de type CHANGE MODE précitée.

On prévoit ici en effet qu'une même commande permette le passage dans le mode de diffusion (ou multiutilisateur) lorsque le processeur 4 fonctionne dans le mode diversifié et le passage dans le mode diversifié lorsque le processeur 4 fonctionne dans le mode de diffusion. En variante, on pourrait prévoir deux commandes distinctes pour mettre en oeuvre respectivement ces deux basculements.

À réception de cette commande, le processeur 4 lit les clés de session SK dans la zone susmentionnée de la mémoire vive 8 (où ces clés de sessions ont été sauvegardées à l'étape E18 comme expliqué ci-dessus), ainsi ici que le compteur de chiffrement et la valeur de chaînage, et bascule à l'étape E30 dans le mode diversifié utilisant ces clés de session SK. Le processeur 4 peut ainsi à nouveau utiliser le canal sécurisé mis en place par les étapes E2 à E10. On peut éventuellement prévoir alors que suite à ce basculement en mode diversifié, les données de restauration soient invalidées (par exemple effacées) de sorte qu'il ne sera possible d'effectuer à nouveau ultérieurement un tel basculement.

Le processeur 4 reçoit alors à l'étape E32 une commande d'autorisation ATHZ à laquelle est annexé un code de vérification d'intégrité MAC permettant une vérification des données Di installées (c'est-à-dire mémorisées, ici dans la mémoire non-volatile 6) à l'étape E26, éventuellement lors de plusieurs passages à cette étape. Des exemples d'obtention du code de vérification d'intégrité MAC sont donnés plus bas.

La commande d'autorisation est par exemple une nouvelle commande que l'on propose ici d'introduire, sous la dénomination AUTHORIZE_ACTION.

La commande d'autorisation ATHZ faisant partie des échanges dans le canal sécurisé susmentionné, les données annexées à cette commande (ici le code de vérification d'intégrité MAC) sont chiffrées au moyen de la clé de session de chiffrement ou de déchiffrement SK-ENC.

Le processeur 4 procède ainsi à l'étape E34 au déchiffrement du code de vérification d'intégrité MAC, par application d'un algorithme cryptographique (ici symétrique) de déchiffrement utilisant la clé de session de chiffrement ou de déchiffrement SK-ENC. L'algorithme cryptographique est ici un algorithme de type AES.

Le processeur 4 peut alors vérifier à l'étape E36 l'intégrité des données Di mémorisées dans la mémoire non-volatile 6 lors du ou des passage(s) à l'étape E26 en utilisant le code de vérification d'intégrité MAC déchiffré.

En cas d'échec de la vérification de l'étape E36, le processeur 4 n'utilise pas les données Di, mais met en oeuvre un traitement d'erreur à l'étape E38, par exemple en renvoyant un message d'erreur à l'appareil électronique responsable de la génération des commandes, par exemple un serveur distant.

En cas de succès de la vérification de l'étape E36, le processeur 4 commande par exemple l'émission à l'étape E40, via l'interface 10, d'un message de bon fonctionnement. Au cours de son fonctionnement, le processeur 4 utilisera alors les données Di mémorisées dans la mémoire non-volatile 6 à l'étape E26. Dans les exemples décrits ci-après, certaines parties au moins du système d'exploitation applicatif représenté par les données Di seront exécutées par le processeur 4.

Les figures 3 et 4 représentent deux contextes possibles d'utilisation d'un procédé tel qu'il vient d'être décrit.

Dans ces deux contextes, on souhaite installer de manière sécurisée dans l'élément sécurisé 2 (c'est-à-dire charger dans la mémoire non volatile 6) une partie applicative DATASEND d'un système d'exploitation ou encore d'une application. Une partie primaire LOADER sur l'élément sécurisé 2 (c'est-à-dire mémorisée dans la mémoire non volatile 6) est par exemple ici responsable du chargement des données envoyées . Dans un mode de réalisation, les données envoyées peuvent être utilisées par l'élément sécurisé 2 sans le déploiement de la partie primaire LOADER (c'est le cas par exemple d'une application autonome qui pourra s'exécuter sans intervention de la partie primaire LOADER après chargement). Dans un autre mode de réalisation, la partie primaire LOADER pourrait en outre être utilisée pour lancer le déploiement des données chargées.

La partie applicative DATASEND est disponible au niveau d'un système informatique de conception 30. Ce système informatique de conception 30 est par exemple géré par le fabricant de l'élément sécurisé 2. Le système informatique de conception 30 présente un niveau de sécurité élevé.

La partie applicative DATASEND doit être transmise à l'élément sécurisé 2 via un serveur de gestion 20, par exemple géré par un opérateur ou fabricant de téléphonie mobile. L'élément sécurisé 2 est justement associé à cet opérateur ou fabricant de téléphonie mobile. Précisément, l'élément sécurisé 2 mémorise des données permettant à un terminal utilisateur portant l'élément sécurisé 2 d'accéder à au moins un réseau de téléphonie mobile opéré par l'opérateur de téléphonie mobile.

Le terminal utilisateur précité n'est pas mentionné sur les figures 3 et 4 par mesure de simplification. On comprend toutefois que les échanges de données entre le serveur de gestion 20 et l'élément sécurisé 2 utilisent des moyens de télécommunication du terminal utilisateur (ainsi qu'éventuellement le réseau de téléphonie mobile précité).

Le serveur de gestion 20 présente un niveau de sécurité moyen. On prévoit toutefois un module de sécurité 25 qui est relié (via une liaison sécurisée) au serveur de gestion 20 (par exemple au moyen d'une liaison filaire, ici de type Ethernet) et qui présente quant à lui un niveau de sécurité élevé.

Le module de sécurité 25 est par exemple de type HSM (pour "*Hardware Security Module").*

Dans le cas de la figure 3 comme de la figure 4, le module de sécurité 25 mémorise le jeu de clés statiques K associé à l'élément sécurisé 2 (et également mémorisé dans la mémoire non-volatile 6 de l'élément sécurisé 2 comme déjà indiqué). On remarque que le module de sécurité 25 mémorise (ou peut obtenir, par exemple par dérivation à partir d'un identifiant de l'élément sécurisé et d'une clé maître) un jeu spécifique de clés statiques K pour tout élément sécurisé géré par le serveur de gestion 20.

Comme représenté sur les figures 3 et 4, le système informatique de conception 30 et l'élément sécurisé 2 mémorisent une clé symétrique K_{OS}, ici commune à un grand nombre d'éléments sécurisés et utilisée pour chiffrer les parties applicatives DATASEND à installer sur ces éléments sécurisés. Cette clé commune K_{OS} est gérée par le fabriquant des éléments sécurisés 2 et reste confinée dans ces éléments sécurisés 2 et le système informatique de conception 30.

On décrit à présent les caractéristiques propres à la solution de la figure 3.

Dans l'exemple de la figure 3, le système informatique de conception 30 mémorise en outre le jeu de clés de diffusion (ou clés de campagne) BK, qui comprend ici la clé de diffusion de chiffrement ou de déchiffrement BK-ENC déjà mentionnée et une clé de diffusion BK-MAC conçue pour générer un code de vérification d'intégrité. Ces clés de diffusion (ou de campagne) BK sont utilisées pour tous les éléments sécurisés qui doivent recevoir la partie applicative DATASEND (c'est-à-dire en pratique une mise à jour de leur système d'exploitation ou encore une mise à jour d'une application).

Le système informatique de conception 30 peut donc transmettre au serveur de gestion 20 :
- la partie applicative DATASEND chiffrée par application d'un algorithme cryptographique (ici symétrique) de chiffrement utilisant la clé de diffusion de chiffrement ou de déchiffrement BK-ENC ;
- le code de vérification d'intégrité MAC, déterminé sur la base de la clé de diffusion BK-MAC et de la partie applicative DATASEND ;
- les clés de diffusion BK-ENC, BK-MAC chiffrées par application d'un algorithme cryptographique (ici symétrique) de chiffrement utilisant la clé commune K_{OS}.

On remarque que ces éléments sont communs à tous les éléments sécurisés qui doivent recevoir la partie applicative DATASEND (par exemple lors d'une mise à jour du système d'exploitation de ces éléments sécurisés) et que système informatique de conception 30 n'a donc pas besoin de générer une version chiffrée de la partie applicative DATASEND pour chaque élément sécurisé à mettre à jour.

Le serveur de gestion 20 transmet les clés de diffusion BK-ENC, BK-MAC chiffrées au module de sécurité 25 afin que ces données soient chiffrées par application d'un algorithme cryptographique (ici symétrique) de chiffrement utilisant une clé de session de chiffrement ou de déchiffrement SK-ENC. Cette clé de session de chiffrement ou de déchiffrement SK-ENC est obtenue en parallèle au sein du module de sécurité 25 et au sein de l'élément sécurisé 2 (comme déjà décrit plus haut) sur la base notamment d'une clé statique K-ENC du jeu de clés statiques K (mémorisée dans le module de sécurité 25 et dans la mémoire non-volatile 6 de l'élément sécurisé 2).

Seules les clés de diffusion BK-ENC, BK-MAC et le code de vérification d'intégrité MAC sont chiffrées de manière diversifiée (c'est-à-dire en produisant une version chiffrée pour chaque élément sécurisé à mettre à jour) et les traitements au niveau du module de sécurité 25 sont donc limités (par rapport notamment à une situation où une version chiffrée de l'ensemble de la partie application DATASEND devrait être générée pour chaque élément sécurisé à mettre à jour).

On remarque que, dans cet exemple, les clés de diffusion BK-ENC, BK-MAC sont transmises doublement chiffrées (chiffrées par la clé commune K_{OS} et chiffrées par la clé de session SK-ENC).

Les clés de diffusion BK-ENC, BK-MAC peuvent alors être transmises du serveur de gestion 20 à l'élément sécurisé 2 conformément à l'étape E14 de la figure 2, après établissement d'une liaison sécurisée conformément aux étapes E2 à E10 de la figure 2.

Les clés de diffusion BK-ENC, BK-MAC sont déchiffrées au sein de l'élément sécurisé 2, d'une part en utilisant la clé de session de chiffrement ou de déchiffrement SK-ENC (comme indiqué à l'étape E16 de la figure 2) et ici d'autre part en utilisant la clé commune K_{OS} (mémorisée au sein de la mémoire non-volatile 6 comme déjà mentionné).

La partie applicative DATASEND peut alors être transmise du serveur de gestion 20 à l'élément sécurisé 2 (cette partie applicative DATASEND étant chiffrée au moyen de la clé de diffusion de chiffrement ou de déchiffrement BK-ENC comme indiqué plus haut).

L'élément sécurisé 2 reçoit, déchiffre et mémorise (dans la mémoire non-volatile 6) la partie applicative DATASEND selon les étapes E22 à E26 de la figure 2 (la partie applicative DATASEND étant éventuellement répartie en plusieurs blocs de données Di, avec i = 1, ..., N).

L'élément sécurisé 2 peut alors recevoir le code de vérification d'intégrité MAC (ici chiffré par la clé symétrique K_{OS} du serveur de gestion 20 via le canal sécurisé par la clé de session de chiffrement ou de déchiffrement SK-ENC, puis vérifier l'intégrité de la partie applicative DATASEND en utilisant le code de vérification d'intégrité MAC et la clé de diffusion BK-MAC, conformément aux étapes E32 à E36 de la figure 2.

On décrit à présent les caractéristiques propres à la solution de la figure 4.

Dans l'exemple de la figure 4, le système informatique de conception 30 mémorise une clé commune d'intégrité K_{MAC} mémorisée dans un grand nombre d'éléments sécurisés et utilisée pour vérifier l'intégrité des parties applicatives DATASEND installées sur ces éléments sécurisés. Cette clé commune d'intégrité K_{MAC} est gérée par le fabriquant des éléments sécurisés 2 et reste confinée dans ces éléments sécurisés 2 et le système informatique de conception 30.

Le système informatique de conception 30 peut donc transmettre au serveur de gestion 20 :
- la partie applicative DATASEND chiffrée par application d'un algorithme cryptographique (ici symétrique) de chiffrement utilisant la clé commune K_{OS} ;
- le code de vérification d'intégrité MAC, déterminé sur la base de la clé commune d'intégrité K_{MAC} et de la partie application DATASEND.

Le module de sécurité 25 associé au serveur de gestion 20 mémorise quant à lui (outre le jeu de clés statiques K) une clé de diffusion (ou de campagne) de chiffrement ou de déchiffrement BK-ENC.

Le module de sécurité 25 peut donc établir un canal sécurisé (par chiffrement au moyen d'une clé de session de chiffrement ou de déchiffrement SK-ENC générée sur base de la clé statique K-ENC) avec l'élément sécurisé 2 conformément aux étapes E2 à E10 de la figure 2, puis transmettre la clé de diffusion de chiffrement ou de déchiffrement BK-ENC via ce canal sécurisé pour réception par l'élément sécurisé 2 conformément à l'étape E14 de la figure 2.

Le serveur de gestion 20 transmet alors la partie applicative DATASEND chiffrée via le canal sécurisé multiutilisateur (utilisant un chiffrement au moyen de la clé de diffusion de chiffrement ou de déchiffrement BK-ENC), selon les étapes E22 à E26 de la figure 2 (la partie applicative DATASEND étant éventuellement répartie en plusieurs blocs de données Di, avec i = 1, ..., N).

On remarque que les données Di obtenues après déchiffrement au moyen d'un algorithme de déchiffrement utilisant la clé de diffusion de chiffrement ou de déchiffrement BK-ENC représentent ici (une partie au moins de) la partie applicative DATASEND chiffrée au moyen de la clé commune K_{OS}. Le processeur 2 procède donc ici en outre au déchiffrement de la partie applicative DATASEND par application d'un algorithme de déchiffrement utilisant la clé commune K_{OS}.

La partie applicative DATASEND est alors mémorisée dans la mémoire non-volatile 6 (ce qui correspond à l'étape E26 de la figure 2).

L'élément sécurisé 2 reçoit enfin le code de vérification d'intégrité MAC du serveur de gestion 20 via le canal sécurisé par la clé de session de chiffrement ou de déchiffrement SK-ENC, puis vérifie l'intégrité de la partie applicative DATASEND en utilisant le code de vérification d'intégrité MAC et la clé commune d'intégrité K_{MAC}, conformément aux étapes E32 à E36 de la figure 2.

On remarque que, dans l'exemple de la figure 3 comme dans celui de la figure 4, les étapes de la figure 2 utilisées sont mises en oeuvre du fait de l'exécution d'instructions du système d'exploitation primaire LOADER par le processeur 2.

Par ailleurs, dans les exemples décrits ci-dessus, la clé de session de chiffrement ou de déchiffrement SK-ENC est une clé symétrique obtenue par dérivation à partir d'une clé statique K-ENC mémorisée à la fois au niveau de l'élément sécurisé 2 et au niveau de l'appareil électronique (ici le module de sécurité 25) souhaitant établir un canal sécurisé avec l'élément sécurisé 2.

On peut toutefois prévoir en variante que la clé de session de chiffrement ou de déchiffrement SK-ENC soit une clé symétrique obtenue, au niveau de l'élément sécurisé 2, par dérivation à partir notamment d'une clé privée k_{SE} mémorisée dans l'élément sécurisé 2, et, au niveau de l'appareil électronique, par dérivation à partir notamment d'une autre clé privée K_{EXT} mémorisée dans cet appareil électronique, conformément à une technique de négociation de clés à base de clé publique, comme prévu par exemple dans le document *"Card Secure Channel Protocol* '*11*' *Card Spécification v2.2* - *Amendment F (v1.0)".*

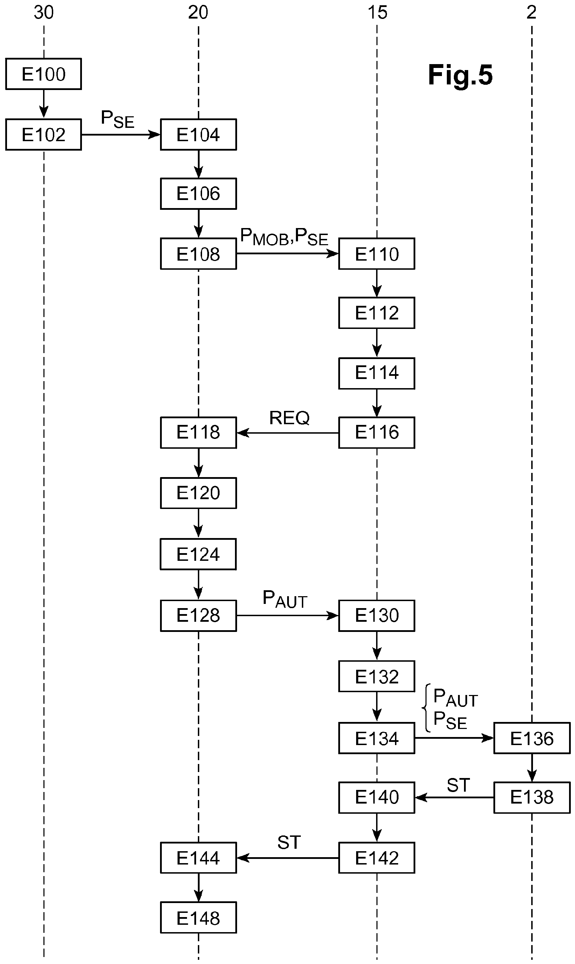

La figure 5 est un logigramme présentant un exemple de procédé de mise à jour du système d'exploitation de l'élément sécurisé 2.

Ce procédé débute à l'étape E100 par la préparation, au sein du système informatique de conception 30, d'un ensemble de données P_{SE} à charger dans la mémoire non-volatile 6 de l'élément sécurisé 2.

Cet ensemble de données P_{SE} contient ici la partie applicative DATASEND du système d'exploitation à mettre à jour. L'ensemble de donnée P_{SE} est par exemple formé pour ce faire de N commandes d'écriture CMDi contenant chacune une partie de la partie applicative DATASEND, sous forme chiffrée par une clé de diffusion (ou de campagne) BK-ENC. Une commande CHM (sans clé cryptographique annexée), comme mentionnée à l'étape E28 de la figure 2, peut en outre être placée à la fin de la séquence des N commandes d'écriture CMDi.

La clé de diffusion BK-ENC est utilisée pour un grand nombre d'éléments sécurisés et les données préparées pourront donc être envoyées (comme expliqué ci-après) avec une forme identique à tous ces éléments sécurisés pour mise à jour de leur système d'exploitation.

Le système informatique de conception 30 procède à l'étape E102 à l'émission de l'ensemble de données P_{SE} à destination du serveur de gestion 20.

Le serveur de gestion 20 reçoit l'ensemble de données P_{SE} à l'étape E104 et combine ici à l'étape E106 cet ensemble de données P_{SE} avec un autre ensemble de données P_{MOB} destinées à être chargées sur le terminal utilisateur 15 (par exemple un téléphone mobile ou téléphone cellulaire) portant l'élément sécurisé 2.

Le serveur de gestion 20 procède à l'étape E108 à l'émission des ensembles de données P_{SE}, P_{MOB} à destination du terminal utilisateur 15 (par exemple en utilisant notamment le réseau de téléphonie mobile associé au serveur de gestion 20 et à l'élément sécurisé 2).

Le terminal utilisateur 15 reçoit les ensembles de données P_{SE}, P_{MOB} à l'étape E110. On peut par exemple prévoir pour ce faire que le fonctionnement du terminal utilisateur 15 bascule d'un environnement d'exécution polyvalent, ou REE pour *"Rich Execution Environment",* à un environnement d'exécution de confiance ou TEE pour "*Trusted Execution Environment*" (par exemple mis en place du fait de l'exécution d'un système d'exploitation de confiance), et que les ensembles de données P_{SE}, P_{MOB} soient reçus dans le cadre de l'exécution d'une application (par exemple de type "*midlet*") au sein de cet environnement d'exécution de confiance.

Le terminal utilisateur 15 extrait l'ensemble de données P_{SE} des données reçues P_{SE}, P_{MOB} à l'étape E112 et procède au traitement dudit autre ensemble de données P_{MOB} à l'étape E114, par exemple en mémorisant ces données dans une mémoire du terminal utilisateur 15.

Le terminal utilisateur 15 émet alors à l'étape E116 (par exemple à un moment ultérieur du fonctionnement) une requête d'autorisation de mise à jour REQ à destination du serveur de gestion 20. Cette requête REQ est reçue par le serveur de gestion 20 à l'étape E118.

Le serveur de gestion 20 prépare alors à l'étape E124 un ensemble de données d'autorisation P_{AUT}.

Cet ensemble de données d'autorisation P_{AUT} comprend par exemple la clé de diffusion BK-ENC chiffrée par une clé cryptographique spécifiquement associée à l'élément sécurisé 2, par exemple une clé de session SK-ENC que seuls le serveur de gestion 20 et l'élément sécurisé 2 peuvent générer.

L'ensemble de données d'autorisation P_{AUT} est ici réalisé sous la forme de la séquence de commandes IU, EA, CHM, ATHZ présentée plus haut en référence à la figure 2.

Le serveur de gestion 20 transmet l'ensemble de données d'autorisation P_{AUT} au terminal utilisateur 15 à l'étape E128.

Le terminal utilisateur 15 reçoit l'ensemble de données d'autorisation P_{AUT} à l'étape E130.

Le terminal utilisateur 15 peut alors combiner à l'étape E132 l'ensemble de données P_{SE} (reçu à l'étape E110 et extrait à l'étape E112) et l'ensemble de données d'autorisation P_{AUT}, ici en insérant les commandes de l'ensemble de données P_{SE} immédiatement après la commande de basculement de mode CHM de l'ensemble de données d'autorisation P_{AUT}.

En effet, comme expliqué plus haut, les données contenues dans les commandes de l'ensemble de données P_{SE} sont chiffrées au moyen de la clé de diffusion BK-ENC partagée par plusieurs éléments sécurisés (en pratique, un grand nombre d'éléments sécurisés) et ces commandes doivent donc être reçues après basculement de l'élément sécurisé 2 en mode multiutilisateur.

Le terminal utilisateur 15 envoie à l'étape E134 les commandes préparées (par combinaison) à l'étape E132 à destination de l'élément sécurisé 2. Par souci de simplification, on a représenté l'envoi successif de ces commandes en une seule étape sur la figure 5. En pratique, chaque étape est envoyée séparément du terminal utilisateur 15 à l'élément sécurisé 2.

L'élément sécurisé 2 reçoit et exécute successivement chacune des commandes, comme décrit plus haut en référence à la figure 2 (représenté schématiquement par l'étape E136).

Une fois l'ensemble des commandes exécutées, l'élément sécurisé 2 émet une information d'état ST (étape E138), comme expliqué plus haut à propos de l'étape E40 de la figure 2.

L'information d'état ST est reçue par le terminal utilisateur 15 à l'étape E140 et transmise à l'étape E142 à destination du serveur de gestion 20.

Le serveur de gestion 20 reçoit l'information d'état ST à l'étape E144 et effectue un traitement en fonction de l'information d'état ST, en autorisant par exemple l'accès du terminal utilisateur équipé de l'élément sécurisé 2 sur le réseau de téléphonie mobile si l'information d'état ST confirme la mise à jour correcte du système d'exploitation de l'élément sécurisé 2 et en effectuant d'autres actions (par exemple : nouvel essai de chargement, interdiction d'accès au réseau pour le terminal utilisateur 15 concerné) si l'information d'état ST ne confirme pas la mise à jour correcte.

Les données d'autorisation P_{AUT} permettent par exemple l'activation de fonctionnalités définies par les ensembles de données P_{SE}, P_{MOB}.

Le procédé qui vient d'être décrit permet ainsi de minimiser les échanges au moment de l'activation de ces fonctionnalités. En effet, grâce au pré-chargement des ensembles de données P_{SE}, P_{MOB} aux étapes E100 à E114, seules sont transmises les données d'autorisation P_{AUT} au moment de l'activation.

## Revendications

1. Procédé de réception de données (Di ; DATASEND) au sein d'une entité électronique (2), qui comprend les étapes suivantes :
- établissement (E2, E4, E6, E8, E10), entre l'entité électronique (2) et un appareil électronique externe, d'un premier canal sécurisé par chiffrement au moyen d'une première clé cryptographique (SK-ENC);
- réception (E14), via le premier canal sécurisé, d'une première commande (CHM) et d'au moins une seconde clé cryptographique (BK-ENC) via le premier canal sécurisé ;
- après l'étape de réception de ladite première commande et avant l'étape de mise en place du second canal sécurisé, une étape de sauvegarde (E18) de la première clé cryptographique (SK-ENC) dans une mémoire (8) de l'entité électronique (2) ;
- mise en place (E20), du fait de l'exécution de ladite première commande (CHM), d'un second canal sécurisé par chiffrement au moyen de la seconde clé cryptographique (BK-ENC) ;
- réception (E22) desdites données (Di ; DATASEND) dans le second canal sécurisé, lesdites données étant chiffrées par la seconde clé cryptographique ;
- après l'étape de réception desdites données et d'une seconde commande (CHM), une étape de basculement (E30) vers le premier canal sécurisé, l'étape de basculement comprenant une sous-étape de lecture de la première clé cryptographique sauvegardée dans la mémoire (8) avant de basculer vers le premier canal sécurisé.

2. Procédé selon la revendication 1, comprenant, après l'étape de basculement, une étape d'invalidation de données de restauration du premier canal sécurisé.

3. Procédé selon la revendication 1 ou 2, comprenant, après l'étape de basculement, une étape d'attente d'une commande d'autorisation dans le premier canal sécurisé.

4. Procédé selon la revendication 3, comprenant une étape de contrôle d'un code de vérification d'intégrité (MAC) dans le premier canal sécurisé.

5. Procédé selon l'une des revendications 1 à 4, dans lequel la première clé cryptographique (SK-ENC) est une clé de session dérivée à partir d'une clé statique (K) mémorisée dans l'entité électronique (2).

6. Procédé selon l'une des revendications 1 à 5, dans lequel la seconde clé cryptographique (BK-ENC) est une clé de diffusion utilisée pour chiffrer un canal sécurisé établie par une autre entité électronique.

7. Procédé selon l'une des revendications 1 à 6, dans lequel les données (DATASEND) représentent une partie d'un système d'exploitation de l'entité électronique (2) ou une partie au moins d'une application ou des données pouvant être utilisées ultérieurement par l'entité électronique.

8. Procédé selon l'une des revendications 1 à 7, dans lequel les données reçues sont mémorisées au sein d'une mémoire non-volatile (6) de l'entité électronique (2).

9. Procédé selon l'une des revendications 1 à 8, dans lequel l'entité électronique est un élément sécurisé (2).

10. Procédé selon l'une des revendications 1 à 9, dans lequel l'appareil électronique externe est un terminal mobile ou un compteur de fourniture d'énergie ou un objet connecté ou un objet portable.

11. Entité électronique (2) qui comprend :
- un processeur (4), une mémoire non volatile (6) et une mémoire vive (8), ledit processeur (4) étant configuré pour :
- établir, entre l'entité électronique et un appareil électronique externe, d'un premier canal sécurisé par chiffrement au moyen d'une première clé cryptographique (SK-ENC) ;
- recevoir, via le premier canal sécurisé, une première commande (CHM) et une seconde clé cryptographique (BK-ENC) ;
- sauvegarder dans la mémoire vive (8) de l'entité électronique (2) la première clé cryptographique (SK-ENC) ;
- mettre en place, du fait de l'exécution de ladite première commande (CHM), un second canal sécurisé par chiffrement au moyen de la seconde clé cryptographique (BK-ENC) ;
- recevoir des données (Di ; DATASEND) dans le second canal sécurisé ;
- basculer vers le premier canal sécurisé avec lecture de la première clé cryptographique sauvegardée dans la mémoire vive (8).

## Patentansprüche

1. Verfahren zum Empfang von Daten (Di; DATASEND) innerhalb einer elektronischen Entität (2), das die folgenden Schritte enthält:
- Herstellung (E2, E4, E6, E8, E10), zwischen der elektronischen Entität (2) und einem externen elektronischen Gerät, eines ersten geschützten Kanals durch Verschlüsselung mittels eines ersten kryptographischen Schlüssels (SK-ENC);
- Empfang (E14), über den ersten geschützten Kanal, eines ersten Befehls (CHM) und mindestens eines zweiten kryptographischen Schlüssels (BK-ENC) über den ersten geschützten Kanal;
- nach dem Schritt des Empfangs des ersten Befehls und vor dem Schritt des Einrichtens des zweiten geschützten Kanals, einen Schritt der Sicherung (E18) des ersten kryptographischen Schlüssels (SK-ENC) in einem Speicher (8) der elektronischen Entität (2);
- Einrichtung (E20), aufgrund der Ausführung des ersten Befehls (CHM), eines zweiten geschützten Kanals durch Verschlüsselung mittels des zweiten kryptographischen Schlüssels (BK-ENC);
- Empfang (E22) der Daten (Di; DATASEND) im zweiten geschützten Kanal, wobei die Daten durch den zweiten kryptographischen Schlüssel verschlüsselt werden;
- nach dem Schritt des Empfangs der Daten und eines zweiten Befehls (CHM), einen Schritt des Umschaltens (E30) zum ersten geschützten Kanal, wobei der Umschaltschritt einen Teilschritt des Lesens des im Speicher (8) gesicherten ersten kryptographischen Schlüssels vor dem Umschalten zum ersten geschützten Kanal enthält.

2. Verfahren nach Anspruch 1, das nach dem Umschaltschritt einen Schritt der Ungültigmachung von Wiederherstellungsdaten des ersten geschützten Kanals enthält.

3. Verfahren nach Anspruch 1 oder 2, das nach dem Umschaltschritt einen Schritt der Erwartung eines Genehmigungsbefehls im ersten geschützten Kanal enthält.

4. Verfahren nach Anspruch 3, das einen Schritt der Kontrolle eines Integritätsprüfungscodes (MAC) im ersten geschützten Kanal enthält.

5. Verfahren nach einem der Ansprüche 1 bis 4, wobei der erste kryptographische Schlüssel (SK-ENC) ein Sitzungsschlüssel ist, der ausgehend von einem in der elektronischen Entität (2) gespeicherten statischen Schlüssel (K) abgeleitet wird.

6. Verfahren nach einem der Ansprüche 1 bis 5, wobei der zweite kryptographische Schlüssel (BK-ENC) Ein Verbreitungsschlüssel ist, der verwendet wird, um einen von einer anderen elektronischen Entität hergestellten geschützten Kanal zu verschlüsseln.

7. Verfahren nach einem der Ansprüche 1 bis 6, wobei die Daten (DATASEND) einen Teil eines Betriebssystems der elektronischen Entität (2) oder mindestens einen Teil einer Anwendung oder Daten darstellen, die später von der elektronischen Entität verwendet werden können.

8. Verfahren nach einem der Ansprüche 1 bis 7, wobei die empfangenen Daten innerhalb eines nichtflüchtigen Speichers (6) der elektronischen Entität (2) gespeichert werden.

9. Verfahren nach einem der Ansprüche 1 bis 8, wobei die elektronische Entität ein geschütztes Element (2) ist.

10. Verfahren nach einem der Ansprüche 1 bis 9, wobei das externe elektronische Gerät ein mobiles Endgerät oder ein Stromlieferungszähler oder ein verbundenes Objekt oder ein tragbares Objekt ist.

11. Elektronische Entität (2), die enthält:
- einen Prozessor (4), einen nichtflüchtigen Speicher (6) und einen Arbeitsspeicher (8), wobei der Prozessor (4) konfiguriert ist, um:
- zwischen der elektronischen Entität und einem externen elektronischen Gerät einen ersten geschützten Kanal durch Verschlüsselung mittels eines ersten kryptographischen Schlüssels (SK-ENC) herzustellen;
- über den ersten geschützten Kanal einen ersten Befehl (CHM) und einen zweiten kryptographischen Schlüssel (BK-ENC) zu empfangen;
- im Arbeitsspeicher (8) der elektronischen Entität (2) den ersten kryptographischen Schlüssel (SK-ENC) zu sichern;
- aufgrund der Ausführung des ersten Befehls (CHM) einen zweiten geschützten Kanal durch Verschlüsselung mittels des zweiten kryptographischen Schlüssels (BK-ENC) einzurichten;
- Daten (Di; DATASEND) im zweiten geschützten Kanal zu empfangen;
- zum ersten geschützten Kanal umzuschalten mit Lesen des im Arbeitsspeicher (8) gesicherten ersten kryptographischen Schlüssels.

## Claims

1. Method for receiving data (Di; DATASEND) within an electronic entity (2), which comprises the following steps:
- establishing (E2, E4, E6, E8, E10), between the electronic entity (2) and an external electronic apparatus, a first secure channel through encryption by way of a first cryptographic key (SK-ENC);
- receiving (E14), via the first secure channel, a first command (CHM) and at least one second cryptographic key (BK-ENC) via the first secure channel;
- after the step of receiving said first command and before the step of setting up the second secure channel, a step (E18) of saving the first cryptographic key (SK-ENC) in a memory (8) of the electronic entity (2);
- setting up (E20), as a result of the execution of said first command (CHM), a second secure channel through encryption by way of the second cryptographic key (BK-ENC) ;
- receiving (E22) said data (Di; DATASEND) in the second secure channel, said data being encrypted by the second cryptographic key;
- after the step of receiving said data and a second command (CHM), a step (E30) of changing to the first secure channel, the changing step comprising a sub-step of reading the first cryptographic key saved in the memory (8) before changing to the first secure channel.

2. Method according to Claim 1, comprising, after the changing step, a step of invalidating restoration data for the first secure channel.

3. Method according to Claim 1 to 2, comprising, after the changing step, a step of waiting for an authorization command in the first secure channel.

4. Method according to Claim 3, comprising a step of monitoring an integrity verification code (MAC) in the first secure channel.

5. Method according to one of Claims 1 to 4, wherein the first cryptographic key (SK-ENC) is a session key derived from a static key (K) stored in the electronic entity (2).

6. Method according to one of Claims 1 to 5, wherein the second cryptographic key (BK-ENC) is a broadcast key used to encrypt a secure channel established by another electronic entity.

7. Method according to one of Claims 1 to 6, wherein the data (DATASEND) represent part of an operating system of the electronic entity (2) or at least part of an application or data able to be used later by the electronic entity.

8. Method according to one of Claims 1 to 7, wherein the received data are stored within a non-volatile memory (6) of the electronic entity (2).

9. Method according to one of Claims 1 to 8, wherein the electronic entity is a secure element (2).

10. Method according to one of Claims 1 to 9, wherein the external electronic apparatus is a mobile terminal or an energy supply meter or a connected object or a portable object.

11. Electronic entity (2) that comprises:
- a processor (4), a non-volatile memory (6) and a random access memory (8), said processor (4) being configured to:
- establish, between the electronic entity and an external electronic apparatus, a first secure channel through encryption by way of a first cryptographic key (SK-ENC);
- receive, via the first secure channel, a first command (CHM) and a second cryptographic key (BK-ENC);
- save the first cryptographic key (SK-ENC) in the random access memory (8) of the electronic entity (2);
- set up, as a result of the execution of said first command (CHM), a second secure channel through encryption by way of the second cryptographic key (BK-ENC);
- receive data (Di; DATASEND) in the second secure channel;
- change to the first secure channel with reading of the first cryptographic key saved in the random access memory (8).
